# EUROPEAN PATENT SPECIFICATION

(11) **EP 2 892 092 B1**
(45) Date of publication and mention of the grant of the patent: **23.08.2017**
(21) Application number: 14788609.7
(22) Date of filing: 20.03.2014
(51) Int. Cl.: H01M 4/58, H01M 4/36, H01M 4/62, H01M 10/0525

(54) **ELECTRODE MATERIAL, ELECTRODE AND LITHIUM ION BATTERY**
ELEKTRODENMATERIAL, ELEKTRODE UND LITHIUMIONENBATTERIE
MATÉRIAU D'ÉLECTRODE, ÉLECTRODE ET BATTERIE AU LITHIUM-ION

(30) Priority: 24.04.2013 JP 2013091117
(43) Date of publication of application: 08.07.2015
(73) Proprietor: SUMITOMO OSAKA CEMENT CO., LTD., Chiyoda-ku Tokyo 102-8465 (JP)
(72) Inventor: OONO, Kouji, Tokyo 102-8465 (JP); KITAGAWA, Takao, Tokyo 102-8465 (JP)
(74) Representative: Cabinet Laurent & Charras
(86) International application number: PCT/JP2014/057790
(87) International publication number: WO 2014/174952

(56) References cited:
- WO-A1-2011/035235
- WO-A1-2011/138964
- JP-A- 2003 292 309
- JP-A- 2011 082 131
- JP-A- 2012 099 469
- KR-B1- 100 898 236
- US-A1- 2012 088 157
- US-A1- 2013 095 390

## Description

### TECHNICAL FIELD

The present invention relates to an electrode material, an electrode, and a lithium ion battery.

### BACKGROUND ART

In recent years, as a small size, light weight, and high capacity battery, a non-aqueous electrolytic solution-based secondary battery such as a lithium ion battery has been proposed and put into practical use. A lithium ion battery is constituted of a positive electrode and a negative electrode which allow the reversible insertion and removal of lithium ions, and a non-aqueous electrolyte.

Compared with secondary batteries of the related art such as lead batteries, nickel-cadmium batteries, and nickel-hydrogen batteries, lithium ion batteries have a light weight, a small size, and high energy. Therefore, lithium ion batteries are used as power supplies for portable electronic devices such as mobile phones, notebook personal computers, and handheld terminals. In addition, recently, studies have been underway to use lithium ion batteries as high-output power supplies for electric vehicles, hybrid vehicles, and electric power tools. Electrode active materials in the batteries used as the high-output power supplies are required to have high-speed charge and discharge characteristics.

In addition, since studies are underway to apply lithium ion batteries to the leveled power generation load as well as to large-size batteries for stationary power supplies and backup power supplies, the problem-free resource amounts as well as the long-term safety and reliability have been becoming important.

A positive electrode of the lithium ion battery is constituted of an electrode material including a lithium-containing metal oxide allowing the reversible insertion and removal of lithium ions, which is called a positive electrode active material, a conductive auxiliary agent and a binder. In addition, the positive electrode in the lithium ion battery is formed by applying the electrode material to the surface of a metal foil called a collector. As the positive electrode active material of the lithium ion battery, generally, lithium cobalt oxide (LiCoO₂) is used. In addition, as the positive electrode active material of the lithium ion battery, a lithium (Li) compound such as lithium nickel oxide (LiNiO₂), lithium manganese oxide (LiMn₂O₄), or lithium iron phosphate (LiFePO₄) is also used. Among these lithium compounds, lithium cobalt oxide and lithium nickel oxide have problems of the unstable charged state and the like in addition to problems of toxicity of elements and the limited resource amounts. In addition, lithium manganese oxide is pointed out to have a problem of solubility in an electrolytic solution at a high temperature.

Therefore, in recent years, as an electrode material having excellent long-term stability and reliability, phosphate-based electrode materials having an olivine structure, which are represented by lithium iron phosphate, have been attracting attention.

However, phosphate-based electrode materials have insufficient electron conductivity. Therefore, in order to charge and discharge a high current, a variety of attempts such as the miniaturization of particles and the conjugation with a conductive substance are required, and thus far, a number of efforts have been made. Therefore, as a method for increasing the electron conductivity of the phosphate-based electrode material, for example, a method in which second and third elements are added and dissolved in solid solutions has been proposed (for example, refer to Japanese Laid-open Patent Publication No. 2009-263222).

In addition, it is known that elements in the electrode material such as chromium and nickel are dissolved in an electrolytic solution during charge and discharge, and are re-precipitated and grow on the negative electrode. It is known that the re-precipitation and growth of the elements not only degrade the activity of the negative electrode but also form conduction paths between the positive electrode and the negative electrode to cause short-circuiting, and, therefore, have a serious influence on safety. As described above, it is difficult to say that the introduction of an excessive amount of foreign elements into the electrode material is a guaranteed effective method for increasing the electron conductivity of the electrode material. Therefore, a number of studies are underway to obtain electrode materials having a higher purity.

KR2003-0066396 discloses a lithium ion battery comprising a positive electrode having an electrode active material made of particles of a ferrous lithium phosphate crystal represented by the formula LiFeMePO4 with Me selected from Mn, Co and Ni, said particle surface being coated by a carbonaceous material.

US2012/0088157 discloses a lithium ion battery comprising a positive electrode having an electrode active material made of particles of a ferrous lithium phosphate crystal represented by the formula LiFePO4, said particle surface being coated by a carbonaceous material.

### DISCLOSURE OF THE INVENTION

Elements used for electrode materials such as manganese, iron, and cobalt are similar in properties to elements of chromium and nickel which are elements belonging to the same period (Period 4) in the periodic table. Therefore, the elements of chromium and nickel can be easily incorporated into electrode materials from raw materials or from the environment. The elements of chromium and nickel incorporated into an electrode material generate defects in the crystal structure, and are likely to serve as the start points of the above-described dissolution. As a result, damage on negative electrode by the dissolution or the degradation of safety by short-circuiting is caused, and additionally, the amount of active species in the electrode active material is decreased, creating another problem of a decrease in the capacity of a lithium ion battery.

The present invention has been made to solve the above-described problems, and an object of the present invention is to provide an electrode material having excellent electron conductivity, load characteristics, and cycle characteristics; an electrode; and a lithium ion battery.

As a result of intensive studies to solve the above-described problems, the present inventors found that, due to a high oxidation-reduction potential, in a reaction potential range of elements such as manganese, iron, and cobalt, a favorable phosphate-based electrode material having excellent electron conductivity and load characteristics can be realized by adding a small amount of inert nickel, and completed the present invention.

That is, an electrode material of the present invention disclosed in claim 1. An electrode of the present invention is an electrode formed using the electrode material according to the invention. A lithium ion battery of the present invention is a lithium ion battery including a positive electrode made of the electrode according to the invention. According to the present invention, it is possible to provide an electrode material having excellent electron conductivity, load characteristics, and cycle characteristics, an electrode, and a lithium ion battery.

### DETAILED DESCRIPTION OF THE INVENTION

Hereinafter, an embodiment will be described.

### ELECTRODE MATERIAL

An electrode material of the present embodiment is an electrode material including an electrode active material represented by LiₓFe_{y}A_{z}BO₄ (here, A represents Mn or both Mn and Co, B represents one or more selected from a group consisting of P, Si, and S, 0≤x<4, 0<y<1.5, and 0<z<1.5) as a main component and nickel, in which particle surfaces of the electrode active material are coated with a carbonaceous film, and a content of nickel is in a range of 1 ppm to 100 ppm.

In the electrode material of the present embodiment, the content of manganese is in the range of 243ppm to 4604ppm. In addition, in the electrode material of the present embodiment, the content of cobalt is preferably 80 ppm or less, and more preferably in a range of 1 ppm to 80 ppm.

In the electrode material of the present embodiment, to further increase the conductivity, the particle surfaces of the electrode active material represented by LiₓFe_{y}A_{z}BO₄ (here, A represents either or both selected from a group consisting of Mn and Co, B represents one or more selected from a group consisting of P, Si, and S, 0 ≤x<4, 0<y<1.5, and 0<z<1.5) are coated with a carbonaceous film.

In the electrode material of the present embodiment, the content of nickel in the entirety of the electrode material is in a range of 1 ppm to 100 ppm, preferably in a range of 1 ppm to 85 ppm, and more preferably in a range of 1 ppm to 60 ppm.

Here, the reason for the content of nickel to be preferably in the above-described range is that, when the content of nickel is outside the above-described range, the following phenomena occur. When the content of nickel is less than 1 ppm in an electrode material including an electrode active material containing iron (LiₓFe_{y}A_{z}BO₄) as a main component, the electron conductivity of the electrode material cannot be increased. On the other hand, when the content of nickel exceeds 100 ppm, defects are generated in the crystal structure, and nickel is dissolved in an electrolytic solution during charge and discharge and is re-precipitated and grows on the negative electrode. Therefore, not only is the activity of the negative electrode degraded, but also conduction paths are formed between the positive electrode and the negative electrode, and as a result, short-circuiting is caused.

When the content of nickel in the entirety of the electrode material is set in a range of 1 ppm to 100 ppm in the electrode material of the present embodiment, even after a lithium ion battery using an electrode made from the electrode material as a positive electrode undergoes charge and discharge cycles for a long period of time, damage on the negative electrode or the influence on safety can be substantially ignored. That is, it is possible to obtain an electrode material being excellent in terms of both electron conductivity and stability (dissolution resistance) by adding nickel in a range of 1 ppm to 100 ppm in an electrode material which is mainly including an electrode active material containing iron (LiₓFe_{y}A_{z}BO₄).

An ordinarily-used industrial grade iron raw material contains nickel as an impurity, and particularly, an iron raw material manufactured using industrial waste iron may contain a large amount of nickel depending on the type of industrial waste iron. Therefore, it may be inappropriate to use an electrode active material containing iron (LiₓFe_{y}A_{z}BO₄) as an iron raw material.

In the electrode material of the present embodiment, the content of nickel in the electrode material is managed in a range of 1 ppm to 100 ppm without carrying out performance assessment of the battery, whereby it is possible to use an industrial-grade iron raw material or an iron raw material of a recycled raw material having no adverse influence on electron conductivity and stability (dissolution resistance). In addition, it is also possible to reduce the manufacturing costs of the electrode material.

In addition, since nickel is contained in ordinary stainless steel, in the synthesis of an electrode material including a heating step accompanied by a reaction, it is possible to add nickel to the electrode material by using stainless steel as a material for a member that comes into contact with a raw material such as a container during heating and in the steps before heating. As a result, it is possible not only to reduce the prices of manufacturing facilities, and furthermore, reduce the prices of products but also to anticipate a result of improvement in performance.

As described above, it is easy to form a solid solution of nickel in an electrode material including an electrode active material containing iron (LiₓFe_{y}A_{z}BO₄) as a main component; however, when more than 100 ppm of nickel is present in the crystal structure, the elution of not only nickel but also iron is accelerated. This is because that lattice strain caused by nickel dissolved in a solid solution in the lattice serves as a start point of dissolution.

In a step of forming a carbonaceous film on the surface of the electrode active material, it is possible to add a small amount of nickel. It is possible to obtain an electrode active material having better performance, particularly, excellent load characteristics and cycle characteristics by carrying out a thermal treatment in a non-oxidative atmosphere on the mixture including an organic substance that serves as a carbon source, a phosphate-based electrode active material and a small amount of nickel, or on the mixture obtained by further adding iron to an organic substance that is a precursor of the carbonaceous film for supplement of the carbonization catalytic capability that becomes insufficient with a small amount of nickel and iron when the electrode active material includes a large amount of manganese and cobalt that serve as negative catalysts for carbonization.

In this case, for example, when stainless steel is used for a mixing facility of the organic substance and the phosphate-based electrode active material, and the mixing conditions are adjusted, it is also possible not to add a new nickel source.

The electrode material of the present embodiment is an iron polyanionic electrode material including a small amount of nickel, particularly, an electrode material for lithium ion batteries made of a phosphate-based electrode active material having an olivine structure. That is, the electrode material of the present embodiment is an electrode material such as lithium iron phosphate (LiFePO₄) or Li[MnFe]PO₄, in which a small amount of nickel is introduced to impart favorable electron conductivity and cycle stability, and the content of nickel is managed in a range of 1 ppm to 100 ppm, whereby excellent electron conductivity is obtained, and furthermore, the adverse influence of the elution caused by the nickel-induced lattice strain is substantially removed.

That is, the electrode material of the present embodiment includes an electrode active material, which contains iron and is represented by LiₓFe_{y}A_{z}BO₄ as a main component, and nickel, and the content of the nickel is set in a range of 1 ppm to 100 ppm. Therefore, the electrode material of the present embodiment obtains increased electron conductivity. In addition, in a lithium ion battery including an electrode formed using the electrode material of the present embodiment, when nickel is dissolved in an electrolytic solution during charge and discharge, and is re-precipitated and grows on the negative electrode, it is possible to prevent the activity of the negative electrode from being degraded. Therefore, in a lithium ion battery including the electrode formed using the electrode material of the present embodiment as a positive electrode, excellent electron conductivity can be obtained, and even after a long period of charge and discharge cycles, damage on the negative electrode or the influence on safety can be substantially ignored. In addition, it is possible to realize a lithium ion battery having a high voltage, a high energy density, high load characteristics, and high-speed charge and discharge characteristics. As a result, it is possible to realize a lithium ion battery having long-term cycle stability and reliability.

### METHOD FOR MANUFACTURING THE ELECTRODE MATERIAL

The electrode material of the present embodiment is obtained by mixing an electrode active material, a nickel source, and an organic substance that serves as a carbon source, and then carrying out a thermal treatment in a non-oxidative atmosphere.

The electrode active material in the present embodiment can be produced using a solid reaction method, a hydrothermal synthesis method, or the like, but the electrode active material is preferably synthesized at a high pressure using the hydrothermal synthesis method since, compared with the solid reaction method, a target substance can be obtained at a low temperature, and it is possible to obtain fine particles having excellent monodispersibility.

Next, a method for manufacturing the electrode material will be described in detail.

First, an electrode active material, a nickel source, and an organic substance that serves as a carbon source are dissolved or dispersed in a solvent, thereby forming a homogeneous slurry. During the dissolution or dispersion, a dispersant may be added.

To manufacture the electrode material of the present embodiment, the nickel source is added to the raw materials such as the electrode active material so that the content of nickel in the entirety of the finally-obtained electrode material falls in a range of 1 ppm to 100 ppm, or a raw material including nickel as an impurity is used as a part of the raw materials. Alternatively, in the synthesis of the electrode material, a material containing nickel such as stainless steel is applied to facilities used during heating or in steps before heating.

As the electrode active material represented by LiₓFe_{y}A_{z}BO₄ (here, A represents Mn or both Mn and Co, B represents one or more selected from a group consisting of P, Si, and S, 0≤x<4, 0<y<1.5, and 0<z<1.5) an electrode active material manufacturing using a method of the related art such as a solid phase method, a liquid phase method, or a gas phase method can be used.

As the electrode active material (LiₓFe_{y}A_{z}BO₄), a compound (LiₓFe_{y}A_{z}BO₄ particles) obtained by, for example, hydrothermally synthesizing a slurry-form mixture obtained by mixing a Li source selected from a group consisting of lithium salts such as lithium acetate (LiCH₃COO) and lithium chloride (LiCl) and lithium hydroxide (LiOH), a divalent iron salt such as iron (II) chloride (FeCl₂), iron (II) acetate (Fe(CH₃COO)₂), or iron (II) sulfate (FeSO₄), a phosphoric acid compound such as phosphoric acid (H₃PO₄), ammonium dihydrogen phosphate (NH₄H₂PO₄), or diammonium hydrogen phosphate ((NH₄)₂HPO₄), a small amount of a nickel raw material (for example, a nickel salt such as nickel (II) chloride (NiCl₂), nickel (II) acetate (Ni(CH₃COO)₂), or nickel (II) sulfate (NiSO₄)), if necessary, an A source (the raw material of A in the general formula LiₓFe_{y}A_{z}BO₄) such as manganese sulfate (MnSO₄) or cobalt sulfate (CoSO₄), and water using a pressure-resistant airtight container, washing the obtained sediment using water so as to generate a cake-form precursor substance, and firing the cake-form precursor substance is preferably used.

When the content of nickel in the entirety of the finally-obtained electrode material is managed in a range of 1 ppm to 100 ppm, it is possible to use reagent grade substances having a high purity as the respective raw materials, and add a small amount of the nickel raw material, or to use an industrial-grade or recycled raw material.

The LiₓFe_{y}A_{z}BO₄ particles may be crystalline particles, amorphous particles, or mixed crystal particles in which crystalline particles and amorphous particles coexist. The LiₓFe_{y}A_{z}BO₄ particles may be amorphous particles since, when thermally treated in a non-oxidative atmosphere at 500°C to 1000°C, the amorphous LiₓFe_{y}A_{z}BO₄ particles crystallize. Therefore, in a case in which a carbonaceous film is formed to further increase the electron conductivity, amorphous LiₓFe_{y}A_{z}BO₄ powder is preferably used.

The size of the LiₓFe_{y}A_{z}BO₄ particles (primary particles) is not particularly limited, but the average particle diameter is preferably in a range of 0.01 µm to 20 µm, and more preferably in a range of 0.02 µm to 5 µm.

The reason for the average particle diameter of the primary particles of the electrode active material to be preferably in the above-described range is that, when the average particle diameter of the primary particles of the electrode active material is outside the above-described range, the following phenomenon occurs. When the average particle diameter of the primary particles of the electrode active material is less than 0.01 µm, a large amount of a binder resin is required to couple the electrode material, and the proportion of the electrode active material in an electrode plate decreases. As a result, not only does the capacity decrease, but it also becomes difficult to form a favorable carbonaceous film to further increase the electron conductivity, and thus the discharge capacity decreases during high-speed charge and discharge. As a result, it becomes difficult to realize sufficient charge and discharge rate performance. On the other hand, when the average particle diameter of the primary particles of the electrode active material exceeds 20 µm, the internal resistance of the primary particles increases, and the discharge capacity becomes insufficient during high-speed charge and discharge.

The average particle diameter in the present embodiment refers to the number average particle diameter. The average particle diameter of the primary particles of the electrode active material can be measured using a laser diffraction scattering-type particle size distribution measurement instrument.

The shape of the electrode active material is not particularly limited. Since it is easy to produce an electrode material made of spherical, particularly, truly spherical secondary particles, the shape of the primary particles made of the electrode active material is preferably spherical, particularly, truly spherical.

The reason for the shape of the primary particles of the electrode active material to be preferably spherical, particularly, truly spherical is that, when paste for electrode (positive electrode) production is prepared by mixing the electrode active material, a binder resin (coupling agent), and a solvent, it is possible to reduce the amount of the solvent, and it also becomes easy to apply the paste for electrode (positive electrode) production to a collector.

In addition, the average molecular amount of the organic substance that serves as a carbon source is preferably 200,000 or less, and more preferably 100,000 or less.

When the average molecular amount of the organic substance that serves as a carbon source exceeds 200,000, the solubility of the organic substance in water becomes low. In addition, even when the organic substance is dissolved in water, the viscosity of the obtained solution becomes high, and there is a concern that this high viscosity causes the degradation of workability, which is not preferable.

Examples of the organic substance include glucose, sucrose, polyvinyl alcohol, polyacrylic acid, hydroxyl acid, and the like. The organic substance may be singly used, or a mixture of two or more organic substances may be used.

The solvent is preferably water, and examples of the solvent other than water include alcohols such as methanol, ethanol, 1-propanol, 2-propanol (isopropyl alcohol: IPA), butanol, pentanol, hexanol, octanol, and diacetone alcohol, esters such as ethyl acetate, butyl acetate, ethyl lactate, propylene glycol monomethyl ether acetate, propylene glycol monoethyl ether acetate, and γ-butyrolactone, ethers such as diethyl ether, ethylene glycol monomethyl ether (methyl cellosolve), ethylene glycol monoethyl ether (ethyl cellosolve), ethylene glycol monobutyl ether (butyl cellosolve), diethylene glycol monomethyl ether, and diehtylene glycol monoethyl ether, ketones such as acetone, methyl ethyl ketone (MEK), methyl isobutyl ketone (MIBK), acetylacetone, and cyclohexanone, amides such as dimethyl formamide, N,N-dimethylacetamde, and N-methyl pyrrolidone, glycols such as ethylene glycol, diethylene glycol, and propylene glycol, and the like. The solvent may be singly used, or a mixture of two or more solvents may be used.

The method for dissolving or dispersing the electrode active material and the organic substance that serves as a carbon resource in the solvent is not particularly limited as long as the electrode active material or the precursor of the electrode active material is uniformly dispersed, and the organic substance is dissolved and dispersed. The method for dissolving or dispersing the raw materials of the electrode material in the solvent is preferably, for example, a method in which a medium stirring-type dispersion apparatus that stirs medium particles at a high speed such as a planetary ball mill, an oscillation ball mill, a beads mill, a paint shaker, or an attritor is used.

During the dissolution and dispersion, it is preferable to disperse the electrode active material in a primary particle form, and then stir the organic substance so as to be dissolved since a homogeneous slurry can be prepared. Then, the surfaces of the primary particles of the electrode active material are covered with the organic substance, and consequently, the organic substance-derived carbon is uniformly interposed between the primary particles of the electrode active material.

Next, the slurry is sprayed and dried in a high-temperature atmosphere, for example, in the atmosphere at 70°C to 250°C.

Here, the spraying conditions, for example, the concentration of the electrode active material or the precursor thereof in the slurry, the concentration of an organic compound, the spraying pressure, and the speed, and furthermore the drying conditions after the spraying, for example, the atmosphere temperature and the detention time are appropriately adjusted. Then, a dried substance having an average particle diameter in a range of 0.5 µm to 100 µm, and preferably in a range of 0.5 µm to 20 µm is obtained.

Next, the dried substance is thermally treated in a non-oxidative atmosphere, that is, in an inert atmosphere or a reducing atmosphere at a temperature in a range of 400°C to 1000°C, and preferably in a range of 550°C to 850°C.

The inert atmosphere is preferably an atmosphere of an inert gas such as nitrogen (N₂) or argon (Ar), and in a case in which it is necessary to further suppress oxidization, a reducing atmosphere including a reducing gas such as hydrogen (H₂) is preferred.

The reason for setting the thermal treatment temperature in a range of 400°C to 1000°C is that, when the thermal treatment temperature is outside the above-described range, the following phenomenon occurs. When the thermal treatment temperature is lower than 400°C, the organic substance that serves as a carbon source is not sufficiently decomposed and reacted, and in a case in which the organic substance that serves as a carbon source is not sufficiently carbonized, a thin layer made of a carbonaceous electron conductive substance having a high resistance is obtained as a decomposition and reaction product being generated. On the other hand, when the thermal treatment temperature exceeds 1000°C, a component of the LiₓFe_{y}A_{z}BO₄ particles constituting the electrode active material, for example, lithium (Li) is evaporated, and the composition is altered. Additionally, the grain growth of the LiₓFe_{y}A_{z}BO₄ particles are accelerated, the discharge capacity decreases at a high-speed charge and discharge rate, and it becomes difficult to realize sufficient charge and discharge rate performance.

In addition, the thermal treatment time is not particularly limited as long as the organic substance that serves as a carbon source is sufficiently carbonized, and is, for example, in a range of 0.5 hours to 48 hours.

Through the above-described steps, the electrode material of the present embodiment can be obtained.

According to the method for manufacturing the electrode material of the present embodiment, since the electrode active material, the nickel source, and the organic substance that serves as a carbon source, are mixed together, and then is thermally treated in a non-oxidative atmosphere, the improvement of the electron conductivity and the improvement of the load characteristics are satisfied at the same time, and furthermore, nickel is dissolved in an electrolytic solution, and is re-precipitated and grows on the negative electrode, whereby it is possible to easily manufacture an electrode material capable of suppressing the degradation of the activity of the negative electrode at a low cost. That is, according to the method for manufacturing the electrode material according to the present embodiment, it is possible to easily realize a lower cost electrode material which has a low environmental load and little apparatus damage, and is excellent in terms of electron conductivity, load characteristics, and cycle characteristics.

### ELECTRODE

An electrode of the present embodiment is an electrode formed using the electrode material of the present embodiment.

To produce the electrode of the present embodiment, the electrode material, a coupling agent made of a binder resin, and a solvent are mixed together, thereby preparing paint for electrode formation or paste for electrode formation. At this time, a conductive auxiliary agent such as carbon black may be added if necessary.

As the coupling agent, that is, the binder resin, for example, a polytetrafluoroethylene (PTFE) resin, a polyvinylidene fluoride (PVdF) resin, fluorine rubber, or the like is preferably used.

The blending ratio of the binder resin to the electrode material is not particularly limited, and, for example, the amount of the binder resin blended is set in a range of 1 part by mass to 30 parts by mass, and preferably in a range of 3 parts by mass to 20 parts by mass with respect to 100 parts by mass of the electrode material.

The solvent used for the paint for electrode formation or the paste for electrode formation may be appropriately selected in accordance with the properties of the binder resin, and examples thereof include water, alcohols such as methanol, ethanol, 1-propanol, 2-propanol (isopropyl alcohol: IPA), butanol, pentanol, hexanol, octanol, and diacetone alcohol, esters such as ethyl acetate, butyl acetate, ethyl lactate, propylene glycol monomethyl ether acetate, propylene glycol monoethyl ether acetate, and γ-butyrolactone, ethers such as diethyl ether, ethylene glycol monomethyl ether (methyl cellosolve), ethylene glycol monoethyl ether (ethyl cellosolve), ethylene glycol monobutyl ether (butyl cellosolve), diethylene glycol monomethyl ether, and diehtylene glycol monoethyl ether, ketones such as acetone, methyl ethyl ketone (MEK), methyl isobutyl ketone (MIBK), acetylacetone, and cyclohexanone, amides such as dimethyl formamide, N,N-dimethylacetamde, and N-methyl pyrrolidone, glycols such as ethylene glycol, diethylene glycol, and propylene glycol, and the like. The solvent may be singly used, or a mixture of two or more solvents may be used.

Next, the paint for electrode formation or the paste for electrode formation is applied to one surface of a metal foil, and then is dried, thereby obtaining a metal foil having a coated film made of a mixture of the electrode material and the binder resin formed on one surface.

Next, the coated film is bonded by pressing, and is dried, thereby producing an electrode having the electrode material on one surface of the metal foil.

Through the above-described steps, the electrode of the present embodiment can be produced.

Since the electrode of the present embodiment is formed using the electrode material of the present embodiment, the electron conductivity can be increased, and also nickel is dissolved in the electrolytic solution during charge and discharge, and is re-precipitated and grows on the negative electrode, whereby it is possible to prevent the activity of the negative electrode from being degraded. Therefore, it is possible to realize an electrode which is excellent in terms of electron conductivity and has a high voltage, a high energy density, high load characteristics, and high-speed charge and discharge characteristics, and consequently, it is possible to realize an electrode having long-term cycle stability and reliability.

### LITHIUM ION BATTERY

A lithium ion battery of the present embodiment includes a positive electrode made of the electrode of the present embodiment, a negative electrode made of Li metal, a Li alloy, Li₄Ti₅O₁₂, a carbon material, or the like, an electrolytic solution, and a separator or a solid electrolyte.

Since the lithium ion battery of the present embodiment includes a positive electrode made of the electrode of the present embodiment, it is possible to improve electron conductivity, load characteristics, and cycle characteristics. Therefore, it is possible to provide a lithium ion battery which has durability, high discharge capacity, and sufficient charge and discharge rate performance, and has long-term cycle stability and reliability.

### EXAMPLES

Hereinafter, the present invention will be specifically described using Examples 1 to 7 and Comparative Examples 1 to 3, but the present invention is not limited to these examples.

An electrode active material and a carbonization catalyst solution, which were commonly used in the examples and the comparative examples, were produced.

### ELECTRODE ACTIVE MATERIAL

### (1) LiFePO₄ was produced using the hydrothermal synthesis method.

First, lithium hydroxide (LiOH), phosphoric acid (H₃PO₄), and iron sulfate heptahydrate (FeSO₄·7H₂O) were used as the Li source, the P source, and the Fe source respectively, the components were injected into pure water, and were mixed so that the molar ratio (Li:Fe:P) reached 2:1:1, thereby producing 200 ml of a precursor slurry.

Next, the precursor slurry was put into a pressure-resistant container, and was hydrothermally synthesized for 24 hours at 170°C. After the reaction, the precursor slurry was naturally cooled to room temperature (25°C), and sediment of a cake-form reaction product was obtained. The sediment was sufficiently washed multiple times using distilled water, and the water content was held at 30% so as to prevent the sediment from drying, thereby producing a cake-form substance.

A small amount of a measurement specimen was collected from the cake-form substance, and was vacuum-dried at 70°C for two hours, and the obtained powder was identified through X-ray diffraction. As a result, it was confirmed that single-phase LiFePO4 was generated.

### (2) Li[MnFe]PO₄ was produced using the hydrothermal synthesis method.

A cake-form substance was obtained in the same manner as the case of LiFePO₄ except for the facts that lithium hydroxide (LiOH), phosphoric acid (H₃PO₄), iron sulfate heptahydrate (FeSO₄·7H₂O), and manganese (II) sulfate pentahydrate (MnSO₄·5H₂O) were used as the Li source, the P source, the Fe source, and the Mn source respectively, the components were injected into pure water, and were mixed so that the molar ratio (Li:Fe:Mn:P) reached 2:1:1:1.

### (3) Li[CoFe]PO₄ was produced using the hydrothermal synthesis method.

A cake-form substance was obtained in the same manner as the case of LiFePO₄ except for the facts that lithium hydroxide (LiOH), phosphoric acid (H₃PO₄), iron sulfate heptahydrate (FeSO₄·7H₂O), and cobalt (II) sulfate heptahydrate (CoSO₄-7H₂O) were used as the Li source, the P source, the Fe source, and the Co source respectively, the components were injected into pure water, and were mixed so that the molar ratio (Li:Fe:Co:P) reached 2:1:1:1.

### CARBONIZATION CATALYST SOLUTION

A carbonization catalyst solution was prepared to coat a Li[MnFe]PO₄ active material including Mn and a Li[CoFe]PO₄ active material including Co, in which Mn and Co were negative catalysts of the carbonization of the organic substance, with carbon.

Here, 1 mol of lithium carbonate, 1 mol of iron (III) nitrate, and 1 mol of phosphoric acid were respectively added to water, the solution was prepared so that the total amount reached 1 kg, and subsequently, the solution was stirred and dissolved, thereby obtaining a carbonization catalyst solution.

The equivalent concentration of LiFePO₄ in the carbonization catalyst solution was 15.78% by mass, and the mol concentration was 1 mol/kg.

### EXAMPLE 1

In the synthesis step of LiFePO₄, a positive electrode active material made of LiFePO₄ was obtained by using iron sulfate heptahydrate (FeSO₄·7H₂O) and adding a small amount (corresponding to a content of nickel in the electrode active material of 10 ppm) of nickel sulfate (NiSO₄) in raw materials.

20 g of the LiFePO₄ and 1 g (in terms of LiFePO₄) of the carbonization catalyst solution were mixed, then, 4.0 g of polyvinyl alcohol was added to the mixed solution, furthermore, water was added so that the total amount reached 100 g, and the mixture was crushed and mixed together with 150 g of zirconia balls having a diameter of 5 mm using a ball mill, thereby obtaining a slurry.

The obtained slurry was dried using a spray dryer, was granulated, and then was thermally treated in a nitrogen (N₂) atmosphere at 700°C for 5 hours, thereby obtaining an electrode material A1 coated with a carbonaceous film in Example 1.

### EXAMPLE 2

A positive electrode active material made of LiFePO₄ was obtained in the same manner as in Example 1 except for the fact that nickel sulfate (NiSO₄) was added so that the amount thereof corresponded to a content of nickel in the electrode active material of 80 ppm.

An electrode material A2 coated with the carbonaceous film in Example 2 was obtained using the obtained positive electrode active material in the same manner as in Example 1.

### EXAMPLE 3

A positive electrode active material made of LiFePO₄ was obtained in the same manner as in Example 1 except for the fact that nickel sulfate (NiSO₄) was added so that the amount thereof corresponded to a content of nickel in the electrode active material of 50 ppm.

An electrode material A3 coated with the carbon coat in Example 3 was obtained using the obtained positive electrode active material in the same manner as in Example 1.

### EXAMPLE 4

A positive electrode active material made of LiFePO₄ was obtained in the same manner as in Example 1 except for the fact that nickel sulfate (NiSO₄) was added so that the amount thereof corresponded to a content of nickel in the electrode active material of 1 ppm.

An electrode material A4 coated with the carbon coat in Example 4 was obtained using the obtained positive electrode active material in the same manner as in Example 1.

### EXAMPLE 5

A positive electrode active material made of Li[MnFe]PO₄ was obtained in the same manner as in Example 1 except for the fact that some of iron sulfate heptahydrate (FeSO₄·7H₂O) was substituted by manganese (II) sulfate pentahydrate (MnSO₄·5H₂O) so that the amount of manganese (II) sulfate pentahydrate corresponded to a content of manganese in the electrode active material of 4500 ppm.

An electrode material A5 coated with the carbon coat in Example 5 was obtained using the obtained positive electrode active material in the same manner as in Example 1.

### EXAMPLE 6

A positive electrode active material made of Li[CoFe]PO₄ was obtained in the same manner as in Example 1 except for the fact that some of iron sulfate heptahydrate (FeSO_{4·}7H₂O) was substituted by cobalt (II) sulfate heptahydrate (CoSO₄·7H₂O) so that the amount of cobalt (II) sulfate heptahydrate corresponded to a content of cobalt in the electrode active material of 80 ppm.

An electrode material A6 coated with the carbon coat in Example 6 was obtained using the obtained positive electrode active material in the same manner as in Example 1.

### EXAMPLE 7

In the synthesis step of LiFePO₄, a positive electrode active material made of LiFePO₄ was obtained by using iron sulfate heptahydrate (FeSO₄·7H₂O) and adding a small amount (corresponding to a content of nickel in the electrode active material of 10 ppm) of nickel sulfate (NiSO₄) in raw materials.

A slurry was obtained by adding 20 g of the LiFePO₄ and 4.0 g of polyvinyl alcohol and then adding water to the positive electrode active material, so that the total amount reached 100 g, and then crushing the mixture and mixing it together with 150 g of zirconia balls having a diameter of 5 mm using a ball mill.

The obtained slurry was dried using a spray dryer, was granulated, and then was thermally treated in a nitrogen (N₂) atmosphere at 700°C for 5 hours, thereby obtaining an electrode material A7 coated with the carbon coat in Example 7.

### COMPARATIVE EXAMPLE 1

Iron sulfate heptahydrate (FeSO₄·7H₂O) was dissolved in pure water, and then was recrystallized, thereby removing impurities.

A positive electrode active material made of LiFePO₄ was obtained in the same manner as in Example 1 except for the fact that iron sulfate heptahydrate (FeSO₄·7H₂O) from which the impurities had been removed was used, and nickel sulfate (NiSO₄) was not added.

An electrode material B1 coated with the carbonaceous film in Comparative Example 1 was obtained using the obtained positive electrode active material in the same manner as in Example 1.

### COMPARATIVE EXAMPLE 2

A positive electrode active material made of LiFePO₄ was obtained in the same manner as in Example 1 except for the fact that nickel sulfate (NiSO₄) was added so that the content of nickel in the electrode active material reached 120 ppm.

An electrode material B2 coated with the carbonaceous film in Comparative Example 2 was obtained using the obtained positive electrode active material in the same manner as in Example 1.

### COMPARATIVE EXAMPLE 3

A positive electrode active material made of LiFePO₄ was obtained in the same manner as in Example 1.

The obtained positive electrode active material was thermally treated in a nitrogen (N₂) atmosphere at 700°C for 5 hours, thereby obtaining an electrode material B3 not coated carbonaceous film in Comparative Example 3.

### PRODUCTION OF LITHIUM ION BATTERIES

Lithium ion batteries of Examples 1 to 7 and Comparative Examples 1 to 3 were produced using the respective electrode materials obtained in Examples 1 to 7 and Comparative Examples I to 3.

First, the electrode material, acetylene black (AB) as a conductive auxiliary agent, and polyvinylidene fluoride (PVdF) as a coupling agent (binder) were mixed so that the mass ratio (electrode material:AB:PVdF) reached 90:5:5, and furthermore, N-methyl-2-pyrrolidone (NMP) was added as a solvent so as to impart fluidity, thereby producing positive electrode material paste.

Next, the positive electrode material paste was applied onto a 30 µm-thick aluminum (A1) foil, and was dried. After that, the positive electrode material paste was bonded by pressing so as to obtain a predetermined density, thereby producing an electrode plate.

Next, the obtained electrode plates were respectively trimmed into a disc shape having a diameter of 16 mm, thereby producing individual test electrodes (positive electrodes) of Examples 1 to 7 and Comparative Examples 1 to 3.

Meanwhile, for the assessment of the load characteristics, a counter electrode (negative electrode) made of lithium metal was used.

In addition, for the assessment of the cycle characteristics, a counter electrode (negative electrode) made of artificial graphite was used. The counter electrode made of artificial graphite was produced as described below.

Artificial graphite, acetylene black (AB) as a conductive auxiliary agent, and polyvinylidene fluoride (PVdF) as a coupling agent (binder) were mixed so that the mass ratio (artificial graphite:AB:PVdF) reached 93:2:5, and furthermore, N-methyl-2-pyrrolidone (NMP) was added as a solvent so as to impart fluidity, thereby producing counter electrode material paste.

Next, the counter electrode material paste was applied onto a 30 µm-thick aluminum (Al) foil, and was dried. After that, the counter electrode material paste was bonded by pressing so as to obtain a predetermined density, thereby producing an electrode plate.

Next, the obtained electrode plates were respectively trimmed into a disc shape having a diameter of 16 mm, thereby producing counter electrodes (negative electrodes) for the assessment of the cycle characteristics of Examples 1 to 7 and Comparative Examples 1 to 3.

As a separator, a porous polypropylene film was used.

In addition, as a non-aqueous electrolyte solution that was a non-aqueous electrolyte, 1 mol/L of a LiPF₆ solution was used. Meanwhile, as a solvent used for the LiPF₆ solution, a substance obtained by mixing ethylene carbonate and diethyl carbonate in a volume ratio of 1:1 was used.

In addition, lithium ion batteries of Examples 1 to 7 and Comparative Examples 1 to 3 were produced using the test electrodes (positive electrodes) and the counter electrodes (negative electrodes) which were produced as described above, the non-aqueous electrolyte solution, and a case for 2016-type coin cell.

### DETERMINATION OF THE AMOUNTS OF NICKEL, IRON, MANGANESE, AND COBALT IN THE ELECTRODE MATERIAL

After the respective electrode materials obtained in Examples 1 to 7 and Comparative Examples 1 to 3 were thermally treated in the atmosphere at 750°C for 5 hours, the amounts of solutions obtained by fully dissolving the thermally-treated electrode materials using hydrochloric acid were determined through an ICP atomic emission spectrometric analysis, and the contents of nickel, manganese, and cobalt in the electrode materials were determined.

In addition, the lithium ion batteries that had been subjected to cycle tests were disassembled, the artificial graphite constituting the counter electrodes (negative electrodes) was thermally treated in the atmosphere at 750°C for 5 hours, then, the amounts of the solutions in which residue after the thermal treatment was fully dissolved using hydrochloric acid were determined through an ICP atomic emission spectrometric analysis, and the content of nickel and the content of iron in the artificial graphite were determined.

The measurement results are described in Table 1. In Table 1, "tr." indicates an extremely small amount that is below the lower detection limit.

### CHARGE AND DISCHARGE TEST

Charge and discharge tests were carried out on the respective lithium ion batteries of Examples 1 to 7 and Comparative Examples 1 to 3. The respective lithium ion batteries were constant-current-charged at a current of 0.1 C, and the discharge capacities at individual currents were measured.

The voltage ranges were set in a range of 2 V to 4.2 V in a case in which the positive electrode active material was LiFePO₄, in a range of 2 V to 4.5 V in a case in which the positive electrode active material was Li[MnFe]PO_{4,} and in a range of 2 V to 4.8 V in a case in which the positive electrode active material was Li[CoFe]PO₄.

The cycle tests were carried out in a range of 2 V to 4.2 V at a current of 1 C. The capacity retention was obtained by dividing the discharge capacity after 1000 cycles by the discharge capacity on the fifth cycle.

The measurement results are described in Table 1.

**[Table 1]**

| | Content of Ni in positive electrode material [ppm] | Content of Mn in positive electrode material [ppm] | Content of Co in positive electrode material [ppm] | Discharge capacity at 0.1 C [mAh/g] | Discharge capacity at 5 C [mAh/g] | Capacity retention after 1000 cycles | Content of Ni in negative electrode [ppm] | Content of Fe in negative electrode [ppm] |
|---|---|---|---|---|---|---|---|---|
| Example 1 | 12 | 421 | 15 | 161 | 142 | 0.81 | tr. | tr. |
| Example 2 | 82 | 436 | 13 | 160 | 144 | 0.80 | 1 | 2 |
| Example 3 | 49 | 512 | 16 | 160 | 144 | 0.80 | 1 | tr. |
| Example 4 | 1 | 243 | 10 | 162 | 142 | 0.82 | tr. | tr. |
| Example 5 | 14 | 4604 | 9 | 152 | 140 | 0.79 | 2 | 1 |
| Example 6 | 12 | 512 | 78 | 154 | 139 | 0.79 | 1 | 3 |
| Example 7 | 12 | 422 | 15 | 162 | 143 | 0.82 | tr. | tr. |
| Comparative Example 1 | tr. | 432 | 11 | 161 | 118 | 0.81 | tr. | tr. |
| Comparative Example 2 | 125 | 431 | 12 | 159 | 141 | 0.44 | 33 | 225 |
| Comparative Example 3 | 13 | 287 | 12 | 113 | 67 | 0.42 | tr. | tr. |

According to the above-described results, the lithium ion batteries for which the electrode materials A1 to A7 of Examples 1 to 7 were used all exhibited favorable load characteristics and cycle characteristics.

On the other hand, the lithium ion battery for which the electrode material B 1 of Comparative Example 1 rarely including nickel was used was poorer than Examples 1 to 7 in terms of the load characteristics. In addition, the lithium ion battery for which the electrode material B2 of Comparative Example 2 having a content of nickel of more than 100 ppm was used was poorer than Examples 1 to 7 in terms of the cycle characteristics.

Meanwhile, in Examples 1 to 7 and Comparative Examples 1 to 3, acetylene black was used as the conductive auxiliary agent, but the conductive auxiliary agent was not limited thereto, and a carbon material such as carbon black, graphite, Ketjen black, natural graphite, or artificial graphite may be used.

In addition, in Examples 1 to 7 and Comparative Examples 1 to 3, the counter electrode made of lithium metal was used for the assessment of the load characteristics, and the counter electrode made of artificial graphite was used for the assessment of the cycle characteristics, but the counter electrode is not limited thereto, and other carbon materials such as natural graphite and coke or a negative electrode material such as Li₄Ti₅O₁₂ or a Li alloy may be used as the counter electrode.

In addition, in Examples 1 to 7 and Comparative Examples 1 to 3, as the non-aqueous electrolyte solution that was a non-aqueous electrolyte, a substance including 1 mol/L of a LiPF₆ solution obtained by mixing ethylene carbonate and diethyl carbonate in a volume ratio of 1:1 was used, but the non-aqueous electrolyte solution is not limited thereto, LiBF₄ or LiClO₄ may be used instead of LiPF₆, and propylene carbonate or diethyl carbonate may be used instead of ethylene carbonate.

In addition, in Examples 1 to 7 and Comparative Examples 1 to 3, the electrolytic solution and the separator were used, but it is not necessary to use both the electrolytic solution and the separator at all times, and a solid electrolyte may be used instead of the electrolytic solution and the separator.

Since the electrode material of the present invention includes an electrode active material represented by LiₓFe_{y}A_{z}BO₄ as a main component and nickel, and the particle surfaces of the electrode active material are coated with a carbonaceous film, and the content of nickel is set in a range of 1 ppm to 100 ppm, it is possible to increase the electron conductivity, and in a lithium ion battery including an electrode formed using the electrode material, nickel is dissolved in the electrolytic solution during charge and discharge, and is re-precipitated and grows on the negative electrode, whereby it is possible to prevent the activity of the negative electrode from being degraded, and it is possible to apply the electrode material to next-generation secondary batteries anticipated to have a higher voltage, a higher energy density, higher load characteristics, and high-speed charge and discharge characteristics.

## Claims

1. An electrode material comprising:
an electrode active material represented by LiₓFe_{y}A_{z}BO₄ as a main component, wherein A represents Mn or both Mn and Co, B represents one or more selected from a group consisting of P, Si, and S, 0≤x<4, 0<y<1.5, and 0<z<1.5; and nickel, wherein particle surfaces of the electrode active material are coated with a carbonaceous film, and a content by weight of the nickel with respect to the electrode material is in a range of 1 ppm to 100 ppm, and
a content by weight of the manganese with respect to the electrode material is in a range of 243 ppm to 4604 ppm.

2. The electrode material according to Claim 1,
wherein a content by weight of the cobalt with respect to the electrode material is 80 ppm or less.

3. An electrode formed using the electrode material according to any one of Claims 1 to 2.

4. A lithium ion battery comprising:
a positive electrode made of the electrode according to Claim 3.

## Patentansprüche

1. Ein Elektrodenmaterial, das umfasst:
ein elektrodenaktives Material dargestellt durch LiₓFe_{y}A_{z}BO₄ als Hauptbestandteil, worin A Mn oder sowohl Mn und Co repräsentiert und B einen oder mehrere Bestandteile repräsentiert, ausgewählt aus der Gruppe bestehend aus P, Si, und S, 0 ≤x<4, 0<y<1,5, und 0<z<1,5; und Nickel,
wobei Teilchenoberflächen des elektrodenaktiven Materials mit einem kohlenstoffhaltigen Film beschichtet sind und ein Gewichtsanteil des Nickels bezogen auf das Elektrodenmaterial in einem Bereich zwischen 1 ppm und 100 ppm liegt, und
ein Gewichtsgehalt des Mangans bezogen auf das Elektrodenmaterial in einem Bereich zwischen 243 ppm und 4604 ppm liegt.

2. Elektrodenmaterial gemäß Anspruch 1,
wobei ein Gewichtsgehalt des Kobalts bezogen auf das Elektrodenmaterial in einem Bereich von 80 ppm oder weniger liegt.

3. Eine Elektrode, geformt unter Verwendung des Elektrodenmaterials gemäß einem der Ansprüche 1 bis 2.

4. Eine Lithiumionenbatterie, umfassend:
eine positive Elektrode gefertigt aus der Elektrode gemäß Anspruch 3.

## Revendications

1. Matériau d'électrode comprenant :
un matériau actif d'électrode représenté par du LiₓFe_{y}A_{z}BO₄ comme composant principal, dans lequel A représente du Mn ou à la fois du Mn et du Co, B représente un ou plusieurs éléments sélectionnés dans un groupe constitué de P, Si et de S, 0≤x<4, 0<y<1,5 et 0<z<1,5 ; et du nickel,
dans lequel des surfaces de particules du matériau actif d'électrode sont recouvertes d'un film carboné, et une teneur en poids du nickel par rapport au matériau d'électrode se trouve dans une plage de 1 ppm à 100 ppm, et
une teneur en poids du manganèse par rapport au matériau d'électrode se trouve dans une plage de 243 ppm à 4604 ppm.

2. Matériau d'électrode selon la revendication 1,
dans lequel une teneur en poids du cobalt par rapport au matériau d'électrode est de 80 ppm ou moins.

3. Electrode formée en utilisant le matériau d'électrode selon l'une quelconque des revendications 1 à 2.

4. Batterie au lithium-ion comprenant :
une électrode positive composée de l'électrode selon la revendication 3.
